# EUROPÄISCHE PATENTSCHRIFT

(11) **EP 0 468 311 B1**
(45) Veröffentlichungstag und Bekanntmachung des Hinweises auf die Patenterteilung: **08.10.1997**
(21) Anmeldenummer: 91111641.6
(22) Anmeldetag: 12.07.1991
(51) Int. Cl.: C08F 230/02, B41N 1/08

(54) **Hydrophile Mischpolymere sowie deren Verwendung in der Reprographie**
Hydrophilic copolymers and their use in reprography
Copolymères hydrophiles et leur usage dans la reprographie

(30) Priorität: 21.07.1990 DE 4023269
(43) Veröffentlichungstag der Anmeldung: 29.01.1992
(73) Patentinhaber: Agfa-Gevaert AG, 51373 Leverkusen (DE)
(72) Erfinder: Faust, Raimund-Josef, Dr. Dipl.-Chem., W-6200 Wiesbaden (DE); Lutz, Silvia, W-6500 Mainz-Mombach (DE); Pliefke, Engelbert, Dr., W-6200 Wiesbaden (DE)

(56) Entgegenhaltungen:
- EP-A- 0 069 318

## Beschreibung

Die Erfindung betrifft hydrophile Mischpolymere, aufgebaut aus polymeren Ketten, an denen saure und basische Seitengruppen angeordnet sind, sowie die Verwendung dieser Mischpolymeren zur Hydrophilierung von lithographischen Druckplatten.

Zur Herstellung von Offsetdruckplatten werden geeignete Schichtträger ein- oder beidseitig mit einer lichtempfindlichen Schicht (Kopierschicht) versehen, mit deren Hilfe ein druckendes Bild auf photomechanischem Wege erzeugt wird. Nach Herstellung des druckenden Bildes trägt der Schichtträger die druckenden Bildstellen und bildet zugleich an den bildfreien Stellen (Nichtbildstellen) den hydrophilen Bilduntergrund für den lithographischen Druckvorgang.

Ein zur Herstellung von lithographischen Platten geeigneter Schichtträger für lichtempfindliche Schichten muß daher folgenden Anforderungen genügen:
- Die nach der Belichtung relativ gut löslichen Teile der auf den Schichtträger aufgebrachten lichtempfindlichen Schicht müssen sich zur Erzeugung der Nichtbildstellen in einem Entwicklungsprozeß leicht und rückstandsfrei vom Träger ablösen lassen.
- Der an den Nichtbildstellen freigelegte Träger muß stark hydrophil sein, d.h. eine hohe Affinität zu Wasser besitzen, damit er beim lithographischen Druckvorgang schnell Wasser aufnehmen und dauerhaft halten kann und damit die fette Druckfarbe ausreichend abstößt.
- Die lichtempfindliche Schicht muß ausreichend fest an dem Schichtträger haften; auch die nach dem Belichten und Entwickeln verbliebenen druckenden Teile der Schicht müssen noch fest genug mit dem Träger verbunden sein um eine hohe Druckauflage zu erzielen.

Als Ausgangsmaterial für derartige Schichtträger können Aluminium-, Stahl-, Kupfer-, Messing- oder Zink-, aber auch Kunststoff-Folien oder Papier verwendet werden. Diese Rohmaterialien werden durch geeignete Behandlung ihrer Oberfläche, wie Körnung, Mattverchromung, oberflächliche Oxidation und/oder Aufbringen einer Zwischenschicht, zu Schichtträgern für Offsetdruckplatten. Aluminium, das heute wohl am häufigsten verwendete Basismaterial für Offsetdruckplatten, wird nach bekannten Methoden wie Trockenbürstung, Naßbürstung, Sandstrahlen, chemische und/oder elektrochemische Behandlung oder eine Kombination hiervon oberflächlich aufgerauht. Zur Steigerung der Abriebfestigkeit kann das so aufgerauhte Aluminium noch einer anodischen Oxidation zum Aufbau einer dünnen Oxidschicht unterworfen werden.

In der Praxis werden die Trägermaterialien, insbesondere anodisch oxidierte Trägermaterialien auf der Basis von Aluminium, oftmals zur Verbesserung der Schichthaftung, zur Steigerung der Hydrophilie und/oder zur Erleichterung der Entwickelbarkeit der lichtempfindlichen Schichten vor dem Aufbringen einer lichtempfindlichen Schicht einem weiteren Behandlungsschritt unterzogen, dazu zählen beispielsweise die folgenden Methoden:

In der DE-C 907 147 (= US-A 2,714,066), der DE-B 14 71 707 (= US-A 3,181,461 und US-A 3,280,734) oder der DE-A 25 32 769 (= US-A 3,902,976) werden Verfahren zur Hydrophilierung von Druckplattenträgermaterialien auf der Basis von gegebenenfalls anodisch oxidiertem Aluminium beschrieben, in denen diese Materialien ohne oder mit Einsatz von elektrischem Strom mit wäßriger Natriumsilikat-Lösung behandelt werden.

Aus der DE-A 11 34 093 (= US-A 3,276,868) und der DE-C 16 21 478 (= US-A 4,153,461) ist es bekannt, Polyvinylphosphonsäure oder Mischpolymerisate auf der Basis von Vinylphosphonsäure, Acrylsäure und Vinylacetat zur Hydrophilierung von Druckplattenträgermaterialien auf der Basis von gegebenenfalls anodisch oxidiertem Aluminium einzusetzen. Es wird auch der Einsatz von Salzen dieser Verbindungen erwähnt, aber nicht näher spezifiziert.

Der Einsatz komplexer Fluoride des Titans, Zirkons oder Hafniums gemäß der DE-B 13 00 415 (= US-A 3,440,050) führt ebenfalls zu einer zusätzlichen Hydrophilierung von Aluminiumoxidschichten auf Druckplattenträgermaterialien.

Neben diesen besonders bekanntgewordenen Hydrophilierungsmethoden ist beispielsweise auch noch der Einsatz folgender Polymere auf diesem Anwendungsgebiet beschrieben worden:

In der DE-B 10 56 931 wird der Einsatz von wasserlöslichen, linearen Mischpolymeren auf der Basis von Alkylvinylethern und Maleinsäureanhydriden in lichtempfindlichen Schichten für Druckplatten beschrieben. Daneben werden auch solche Mischpolymere genannt, bei denen die Maleinsäureanhydridkomponente teilweise oder vollständig mit Ammoniak, einem Alkalihydroxid oder einem Alkohol zur Reaktion gebracht wurde.

Aus der DE-B 10 91 433 ist die Hydrophilierung von Druckplattenträgermaterialien auf der Basis von Metallen mit filmbildenden organischen Polymeren, wie Polymethacrylsäure oder Natriumcarboxymethylcellulose oder -hydroxyethylcellulose bei Aluminiumträgern oder einem Mischpolymeren aus Methylvinylether und Maleinsäureanhydrid bei Magnesiumträgern bekannt.

Gemäß der DE-B 11 73 917 (= GB-A 907,719) werden zur Hydrophilierung von Druckplattenträgermaterialien aus Metallen wasserlösliche polyfunktionelle Amino-Harnstoff-Aldehyd-Kunstharze oder sulfonierte Harnstoff-Aldehyd-Kunstharze verwendet, die auf dem Metallträger in einen wasserunlöslichen Zustand ausgehärtet werden.

Zur Herstellung einer hydrophilen Schicht auf Druckplattenträgermaterialien werden gemäß der DE-B 12 00 847 (= US-A 3,232,783) auf dem Träger nacheinander a) eine wäßrige Dispersion eines modifizierten Harnstoff-Formaldehyd-Harzes, eines alkylierten Methylol-Melamin-Harzes oder eines Melamin-Formaldehyd-Polyalkylenpolyamin-Harzes, und b) eine wäßrige Dispersion einer Polyhydroxy- oder Polycarboxyverbindung, wie Natriumcarboxymethylcellulose aufgebracht, und anschließend wird die so überzogene Unterlage c) mit einer wäßrigen Lösung eines Zr-, Hf-, Ti oder Th-Salzes behandelt.

In der DE-B 12 57 170 (= US-A 2,991,204) wird ein Mischpolymer als Hydrophilierungsmittel für Druckplattenträgermaterialien beschrieben, das neben Acrylsäure-, Acrylat-, Acrylamid- oder Methacrylamid-Einheiten noch Si-trisubstitierte Vinylsilan-Einheiten enthält.

Aus der DE-A 14 71 706 (= US-A 3,298,852) ist der Einsatz von Polyacrylsäure als Hydrophilierungsmittel für Druckplattenträgermaterialien aus Aluminium, Kupfer oder Zink bekannt.

Gemäß der DE-C 21 07 901 (= US-A 3,733,200) wird die hydrophile Schicht auf einem Druckplattenträgermaterial aus einem wasserunlöslichen hydrophilen Acrylat- oder Methacrylat-Homopolymeren oder -Copolymeren mit einer Wasserabsorption von mindestens 20 Gew% gebildet.

In der DE-B 23 05 231 (= GB-A 1,414,575) wird eine Hydrophilierung von Druckplattenträgermaterialien beschrieben, bei der auf den Träger eine Lösung oder Dispersion eines Gemisches aus einem Aldehyd und einem synthetischen Polyacrylamid aufgebracht wird.

Aus der DE-A 23 08 196 (= US-A 3,861,917) ist eine Hydrophilierung von aufgerauhten und anodisch oxidierten Aluminium-Druckplattenträgern mit Ethylen-Maleinsäureanhydrid-Copolymeren oder Methylvinylether-Maleinsäureanhydrid-Copolymeren, mit Polyacrylsäure, Carboxymethylcellulose, Natrium-poly(vinylbenzol-2,4-disulfonsäure) oder Polyacrylamid bekannt.

In der DE-B 23 64 177 (= US-A 3,860,426) wird eine hydrophile Haftschicht für Aluminium-Offsetdruckplatten beschrieben, die zwischen der anodisch oxidierten Oberfläche des Druckplattenträgers und der lichtempfindlichen Schicht angeordnet ist und neben einem Celluloseether noch ein wasserlösliches Zn-, Ca-, Mg-, Ba-, Sr-, Co- oder Mn-Salz enthält. Das Schichtgewicht der hydrophilen Haftschicht an Celluloseether beträgt 0,2 bis 1,1 mg/dm², ein gleiches Schichtgewicht wird auch für die wasserlöslichen Salze angegeben. Das Gemisch aus Celluloseether und Salz wird in wäßriger Lösung, gegebenenfalls unter Zusatz eines organischen Lösemittels und/oder eines Tensids, auf den Träger aufgetragen.

Gemäß der US-A 3,672,966 werden anodisch oxidierte Aluminiumoberflächen vor oder während der Versiegelung mit heißem Wasser zur Vermeidung von Sealbelägen mit wäßrigen Lösungen von Acrylsäure, Polyacrylsäure, Polymethacrylsäure, Polymaleinsäure oder Copolymeren von Maleinsäure mit Ethylen oder Vinylalkohol behandelt.

Gemäß der US-A 4,049,746 enthalten Hydrophilierungsmittel für Druckplattenträgermaterialien salzartige Reaktionsprodukte aus wasserlöslichen Polyacrylharzen mit Carboxylgruppen und Polyalkylenimin-Harnstoff-Aldehyd-Harzen.

In der GB-A 1,246,696 werden als Hydrophilierungsmittel für anodisch oxidierte Aluminium-Druckplattenträger hydrophile Kolloide, wie Hydroxyethylcellulose, Polyacrylamid, Polyethylenoxid, Polyvinylpyrrolidon, Stärke oder Gummi arabicum, beschrieben.

Die EP-B 0 149 490 beschreibt zur Hydrophilierung Verbindungen, die neben Aminogruppen zusätzlich Carboxyl- bzw. Carboxylatgruppen, Sulfogruppen oder Hydroxylgruppen enthalten. Diese Verbindungen haben ein Molekulargewicht von höchstens 1000.

Aus dem Stand der Technik ist auch der Einsatz von Metallkomplexen, die niedermolekulare Liganden aufweisen, zur Hydrophilierung von Druckplattenträgermaterialien bekannt. Solche Komplexe sind beispielsweise:
- Komplexionen aus zwei- oder mehrwertigen Metallkationen und Liganden, wie Ammoniak, Wasser, Ethylendiamin, Stickstoffoxid, Harnstoff oder Ethylendiamintetraacetat (DE-A 28 07 396 = US-A 4,208,212),
- Eisencyanid-Komplexe wie K₄(Fe(CN)₆) oder Na₃(Fe(CN)₆) in Anwesenheit von Heteropolysäuren, wie Phosphormolybdänsäure oder ihren Salzen und von Phosphaten (US-A 3,769,043),
- Eisencyanid-Komplexe in Anwesenheit von Phosphaten und Komplexbildnern wie Ethylendiamintetraessigsäure für elektrophotographische Druckplatten mit Zinkoxidoberfläche (= US-A 3,672,885).

In der EP-A 0 069 320 (= US-A 4,427,765) ist ein Verfahren beschrieben, in dem Salze von Polyvinylphosphonsäuren, Polyvinylsulfonsäuren, Polyvinylmethylphosphonsäuren und anderen Polyvinylverbindungen als Nachbehandlungsmittel eingesetzt werden.

In der DE-A 26 15 075 (= GB-A 1,495,895) wird ein Verfahren zur Behandlung bildtragender Offsetdruckplatten mit Polyacrylamid oder einer Mischung von Polyacrylamid und Polyacrylsäure benutzt.

In der SU-A 647 142 wird ein Copolymer aus Acrylamid und Vinyl-Monomeren zur Hydrophilierung von Offsetdruckplatten eingesetzt.

Die DE-C 10 91 433 beschreibt ein Verfahren zur Nachbehandlung von Offsetdruckplattenträgern mit Polymeren von Methacrylsäure, Methylvinylether und Maleinsäureanhydrid.

Acrylamid zur Behandlung von Druckplattenträgern wird auch in der DE-A 25 40 561 erwähnt.

Zum gleichen Zweck, insbesondere zur Verbesserung der Lagerfähigkeit von Druckplatten, beschreibt die DE-A 29 47 708 u.a. Ni-Salzlösungen von Acrylamid und Acrylsäure sowie Acrylamid und Vinylpyrrolidon.

All die oben beschriebenen Methoden sind jedoch mit mehr oder weniger großen Nachteilen behaftet, so daß die so hergestellten Trägermaterialien oft nicht mehr den heutigen Erfordernissen des Offsetdrucks hinsichtlich Entwicklerfestigkeit, Wasserführung, Freilaufverhalten und Auflagebeständigkeit genügen:
- So muß nach der Behandlung mit Alkalisilikaten, die zu guter Entwickelbarkeit und Hydrophilie führen, eine gewisse Verschlechterung der Lagerfähigkeit von darauf aufgebrachten lichtempfindlichen Schichten hingenommen werden, und die Auflage einer so nachbehandelten Druckplatte sinkt drastisch.
- Die Komplexe der Übergangsmetalle begünstigen zwar prinzipiell die Hydrophilie von anodisch oxidierten Aluminiumoberflächen, sie haben jedoch den Nachteil, sehr leicht in Wasser löslich zu sein, so daß sie beim Entwickeln der Schicht mit wäßrigen Entwicklersystemen, die neuerdings in zunehmendem Maße Tenside und/oder Chelatbildner enthalten, die eine große Affinität zu diesen Metallen besitzen, leicht entfernt werden können. Dadurch wird die Konzentration der Übergangsmetallkomplexe auf der Oberfläche mehr oder weniger stark reduziert, was zu einer Abschwächung der hydrophilen Wirkung führen kann.
- Bei der Behandlung von Trägern mit wasserlöslichen Polymeren ohne Verankerungsmöglichkeiten führt deren gute Löslichkeit besonders in wäßrig-alkalischen Entwicklern, wie sie überwiegend zum Entwickeln von positiv arbeitenden lichtempfindlichen Schichten verwendet werden, ebenfalls zu deutlicher Abschwächung der hydrophilierenden Wirkung.
- Monomere, hydrophile Verbindungen, wie z.B. in der EP-B 149 490 beschrieben, haben ganz allgemein den Nachteil, daß sie während des Entwicklungs- bzw. Druckprozesses relativ schnell von der freigelegten Nichtbildstellenoberfläche weggewaschen werden und ihre hydrophile Wirkung verlieren, da nicht genügend Verankerungsstellen in der Oberfläche gegeben sind.
- Auch die Kombination eines Gemisches aus einem wasserlöslichen Polymeren, wie einem Celluloseether, und einem wasserlöslichen Metallsalz führt, da die Schichtgewichte und damit die Schichtstärke relativ hoch gewählt werden (siehe DE-B 23 64 177), zu einer verminderten Kopierschichthaftung, die sich beispielsweise darin äußern kann, daß beim Entwickeln Teile der Entwicklerflüssigkeit Bildstellen unterwandern.

Aufgabe der Erfindung ist es, hochpolymere Hydrophilierungsmittel für Trägermaterialien für Offsetdruckplatten zur Verfügung zu stellen, die die lichtempfindlichen Schichten der Offsetdruckplatten in ihrer Lagerfähigkeit nicht negativ beeinträchtigen und die neben einer guten Haftung zur Oberfläche des Aluminiumträgers einerseits und zur lichtempfindlichen Schicht andererseits eine dauerhafte Hydrophilie der Nichtbildstellen der fertig entwickelten Offsetdruckplatte bewirken. Darüberhinaus sollen die erfindungsgemäßen Hydrophilierungsmittel nur schwer von den damit behandelten Trägermaterialien auswaschbar sein.

Gelöst wird diese Aufgabe durch Bereitstellen von hydrophilen Mischpolymeren gemäß Anspruch 1.

Die weitere Ausgestaltung der Erfindung ergibt sich aus den Merkmalen der Ansprüche 2 bis 14.

Zur Herstellung der erfindungsgemäßen polymeren Hydrophilierungsmittel werden speziell ausgewählte Monomere radikalisch so copolymerisiert, daß Polymerketten aufgebaut werden, an denen statistisch verteilt saure und basische Seitengruppen, die ionisierbar und zur Salzbildung befähigt sind, angeordnet sind.

Dazwischen sind neutrale Monomerbausteine vorhanden, die nicht ionisierbare Seitengruppen aufweisen. Die sauren Gruppen der erfindungsgemäßen polymeren Hydrophilierungsmittel besitzen eine gute Haftung auf dem Aluminiumträger, während die basischen Seitengruppen eine Erhöhung der Hydrophilie durch Wechselwirkung mit dem Feuchtwasser bewirken.

Die polymeren Hydrophilierungsmittel sind wie folgt aufgebaut: 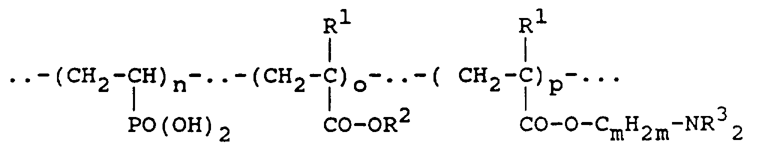 worin
- R¹ :: H, CH₃, C₂H₅
- R² :: Alkyl- bzw. Cycloalkylreste mit 1 bis 17 C-Atomen, vorzugsweise CH₃, C₂H₅ oder C₃H₇
- R³ :: CH₃, C₂H₅ oder C₃H₇
- m :: 2, 3 oder 4
- n, o, p:: Anteile der Monomerbausteine in Mol%, wobei n + o + p = 100 Mol%, mit der Maßgabe, daß n und p jeweils ≥ 2 Mol% sind,
bedeuten.

Die Werte für n und p liegen im allgemeinen im Bereich von 2 bis 50 Mol% und bevorzugt zwischen 10 und 40 Mol%. Insbesondere stehen die sauren und basischen Monomerbausteine etwa in einem äquimolaren Verhältnis zueinander (n ≈ p) und sind zu jeweils etwa 10 bis 50 Mol% in den Mischpolymeren enthalten.

Die neutralen, nicht ionisierbaren Monomerbausteine haben einen Anteil (o) von 0 bis 96 Mol%, bevorzugt von 0 bis etwa 80 Mol%, insbesondere von etwa 20 bis 80 Mol%.

Die hydrophilen Mischpqlymere sind statistisch aufgebaut und besitzen ein mittleres Molgewicht von mindestens 1 000, vorzugsweise von 20 000 bis 50 000, doch sind auch Mischpolymere mit noch höheren Molgewichten als 50 000 mit Vorteil anwendbar.

Saure Monomerbausteine (Monomertyp A) entstehen aus Vinylphosphonsäure als Monomer.

Neutrale, nicht ionisierbare Monomerbausteine (Monomertyp B) gehen beispielsweise aus Methylacrylat, Methylmethacrylat, Ethylacrylat und Ethylmethacrylat hervor.

Basische Monomerbausteine (Monomertyp C) werden z.B. aus Dimethylaminoethyl-acrylat und -methacrylat, Diethylaminoethyl-acrylat und -methacrylat, Dimethylaminopropyl-acrylat und -methacrylat, Diethylaminopropyl-acrylat und -methacrylat, Dimethylaminobutylacrylat und -methacrylat, gebildet.

Die Synthese der Hydrophilierungsmittel erfolgt vorteilhaft durch eine radikalisch initiierte Polymerisation in organischen Lösungsmitteln.

Als radikalische Initiatoren können die üblichen Verbindungen verwendet werden, wie Peroxide, z.B. Benzoylperoxid oder Azoverbindungen, beispielsweise Azobisisobutyronitril. Zusätzlich können Regler zur Einstellung des Molekulargewichts verwendet werden. Die Polymerisation in unpolaren Lösungsmitteln - als Fällungspolymerisation ausgeführt - hat den Vorteil, daß niedermolekulare, oligomere und chemisch uneinheitliche Anteile, z.B. Produkte, die nur wenig ionisierbare Gruppen enthalten in Lösung bleiben und damit leicht von den ausgefallenen Polymeren abgetrennt werden können. Diese Polymerisationsart hat weiterhin den Vorteil der Einfachheit und der Wirtschaftlichkeit. Die Fällungspolymerisation in organischen Lösungsmitteln, beispielsweise in Benzinfraktionen im Siedepunktbereich von 100 bis 140 °C, ist sehr leicht und mit guter Ausbeute insbesondere für solche Mischpolymere durchführbar, in denen die ionisierbaren sauren und basischen Monomerbausteine zu etwa gleichen Anteilen von jeweils etwa 10 bis 50 Mol% vorliegen. Wenn sowohl n als auch p im Bereich von etwa 1 bis 10 Mol% liegen, dann werden die Polymeren durch Abdestillieren des organischen Lösungsmittels isoliert. Die folgenden Beispiele erläutern die grundsätzliche Polymerisationsmethode für einige bevorzugte Mischpolymere, die Erfindung ist jedoch nicht auf die angeführten Beispiele beschränkt.

Als Trägermaterialien werden bevorzugt Aluminiumträger verwendet, wie sie in der gleichzeitig eingereichten deutschen Anmeldung P 40 23 267.0 beschrieben sind. Auch die Art, wie diese Aluminiumträger mit den erfindungsgemäßen Hydrophilierungsmitteln beschichtet bzw. oberflächenbehandelt werden, ist ausführlich in dieser Anmeldung beschrieben. Die Hydrophilierungsmittel werden im Sinne einer "Absorption", einer "Komplexbildung" oder einer "Salzbildung" auf der speziell vorbehandelten Aluminiumoberfläche so verankert, daß eine dauerhafte Hydrophilie erzielt wird.

### Beispiel 1

Es wird ein Mischpolymer aus Ethylacrylat, Dimethylaminoethylmethacrylat und Vinylphosphonsäure hergestellt. Hierzu werden

| | |
|---|---|
| 100 g | Ethylacrylat |
| 157 g | Dimethylaminoethylmethacrylat und |
| 108 g | Vinylphosphonsäure in |
| 365 g | Methylethylketon (MEK) |

gelöst.

In einem Dreihalskolben, der mit Rührer, Rückflußkühler, Tropftrichter mit Druckausgleichsrohr sowie Gaseinleitungsrohr versehen ist, werden 1145 g Methylethylketon, 20 Gew% der oben beschriebenen Monomerenlösung und 1 Gew% Azobisisobutyronitril (AIBN), bezogen auf das Gesamtgewicht der Monomeren, unter einer Stickstoff-Schutzgasatmosphäre vorgelegt und 1 Stunde polymerisiert. Mit einem Tropftrichter wird die restliche Monomermischung innerhalb 1 Std. zugegeben und das Ganze weitere 2 Std. unter Rückfluß polymerisiert. Sodann werden weitere 0,5 Gew% Azobisisobutyronitril hinzugegeben und 2 Std. unter Rückfluß polymerisiert. Die Aufarbeitung erfolgt durch Absaugen des gebildeten Niederschlags und dreimaliges Waschen des Niederschlags mit je 500 ml Methylethylketon.

Das Produkt wird bei 70 °C getrocknet.
- Ausbeute:: 66 %

Das Produkt ist gut wasserlöslich.

Völlig analog zu dem in Beispiel 1 beschriebenen Polymeren werden die in der untenstehenden Tabelle zusammengestellten Mischpolymere (Beispiele 2 bis 5) hergestellt.

| | Beisp. 2 | Beisp.3 | Beisp.4 | Beisp. 5 |
|---|---|---|---|---|
| Monomer- typ A | Vinylphosphonsäure 33 Mol% | dto. 50 Mol% | dto. 10 Mol% | dto. 9,6 Mol% |
| Monomer- typ B | n-Butylmethacrylat 34 Mol% | | Ethylacrylat 80 Mol% | Methylmethacrylat 83,8 Mol% |
| Monomer- typ C | DMAEMA^{1 )} 33 Mol% | DMAEMA¹⁾ 50 Mol% | DMAEMA¹⁾ 10 Mol% | DMAEMA¹⁾ 6,6 Mol% |
| AIBN | 1,5 Gew.% bezogen auf Monomere | 1,5 Gew.% " | 1,5 Gew.% " | 1,5 Gew.% " |
| Lösemittel (MEK) | 71 Gew.-Teile | 67 Gew.-Teile | 67 Gew.-Teile | 67 Gew.-Teile |
| Ausbeute | 60 Gew.% | 80 Gew.% | nach Abziehen des Lösemittels >95 Gew.% | Nach Abziehen des Lösemittels 90 Gew.% |
| Löslichkeit | klar löslich in Wasser | klar löslich in Wasser | klar löslich in Wasser/Ethanol (1:3) | löslich in MEK |

| | | | | |
|---|---|---|---|---|
| 1) DMAEM = Dimethylaminoethylmethacrylat | | | | |

## Patentansprüche

1. Hydrophile Mischpolymere, aufgebaut aus polymeren Ketten, an denen saure und basische Seitengruppen angeordnet sind, der folgenden Struktur: 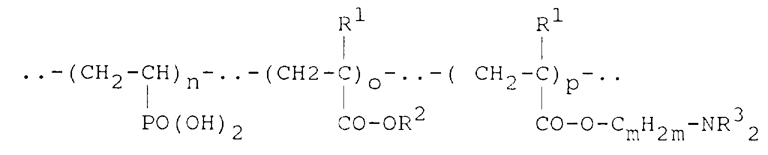 worin
R¹ : H, CH₃, C₂H₅
R² : Alkyl- bzw. Cycloalkylreste mit 1 bis 17 C-Atomen,
R³ : CH₃, C₂H₅ oder C₃H₇
m : 2, 3 oder 4
n, o, p: Anteile der Monomerbausteine in Mol%, wobei n + o + p = 100 Mol%, mit der Maßgabe, daß n und p jeweils ≥ 2 Mol% sind und o 0 bis 96 Mol% ist,
bedeuten, worin die hydrophilen Mischpolymere statistisch aufgebaut sind und ein mittleres Molgewicht von mindestens 1000 besitzen.

2. Hydrophile Mischpolymere nach Anspruch 1, dadurch gekennzeichnet, daß es sich bei den Alkylresten R² um Methyl, Ethyl, Propyl oder Isopropyl handelt.

3. Hydrophile Mischpolymere nach Anspruch 1 oder 2, dadurch gekennzeichnet, daß die Monomerbausteine, die saure Seitengruppen tragen, darin in einem Anteil (n) von 2 bis 50 Mol% enthalten sind.

4. Hydrophile Mischpolymere nach Anspruch 1 oder 2, dadurch gekennzeichnet, daß die Monomerbausteine, die basische Seitengruppen tragen, darin in einem Anteil (p) von 2 bis 50 Mol % enthalten sind.

5. Hydrophile Mischpolymere nach Anspruch 1 oder 2, dadurch gekennzeichnet, daß darin die sauren und die basischen Monomerbausteine in etwa äquimolaren Anteilen (n ≈ p) von jeweils 10 bis 50 Mol% und daß die neutralen, nichtionisierbaren Monomerbausteine in einem Anteil (o) von 80 bis 0 Mol% enthalten sind.

6. Hydrophile Mischpolymere nach einem oder mehreren der Ansprüche 1 bis 5, dadurch gekennzeichnet, daß darin die sauren und basischen Monomerbausteine jeweils in einem Anteil von etwa 10 bis 40 Mol% enthalten sind.

7. Hydrophile Mischpolymere nach Anspruch 1, dadurch gekennzeichnet, daß darin die neutralen, nichtionisierbaren Monomerbausteine in einem Anteil (o) von 20 bis 80 Mol% enthalten sind.

8. Hydrophile Mischpolymere nach Anspruch 1, dadurch gekennzeichnet, daß die nichtionisierbaren Monomerbausteine aus Methylacrylat, Methylmethacrylat, Ethylacrylat oder Ethylmethacrylat hervorgegangen sind.

9. Hydrophile Mischpolymere nach einem oder mehreren der Ansprüche 1 bis 8, dadurch gekennzeichnet, daß die Polymerkette ein mittleres Molgewicht von 20 000 bis 50 000 aufweist.

10. Hydrophile Mischpolymere nach einem oder mehreren der Ansprüche 1 bis 9, dadurch gekennzeichnet, daß sie durch radikalische Polymerisation herstellbar sind.

11. Hydrophile Mischpolymere nach Anspruch 10, dadurch gekennzeichnet, daß die radikalische Polymerisation in unpolaren Lösungsmitteln ausgeführt wurde, in denen die Monomeren bei den angewandten Polymerisationstemperaturen von etwa 60 bis etwa 120° C homogen löslich und in denen die gebildeten Mischpolymeren im Sinne einer Fällungspolymerisation unlöslich sind und ausfallen.

12. Hydrophile Mischpolymere nach Anspruch 11, dadurch gekennzeichnet, daß die unpolaren Lösungsmittel unpolare organische Lösungsmittel sind.

13. Verwendung der hydrophilen Mischpolymere nach den Ansprüchen 1 bis 12 für die Hydrophilierung von lithographischen Substraten, insbesondere von anodisierten Aluminiumträgern für Offsetdruckplatten.

## Claims

1. Hydrophilic copolymers synthesised from polymeric chains on which acidic and basic side groups are disposed, of the following structure: 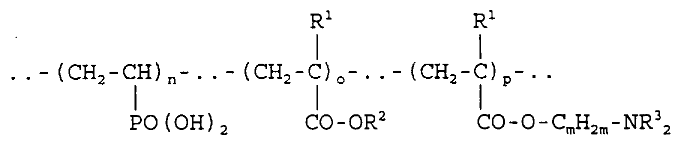 where
R¹ : represents H, CH₃, C₂H₅
R² : represents alkyl or cycloalkyl radicals containing 1 to 17 C atoms,
R³ : represents CH₃, C₂H₅ or C₃H₇,
m : represents 2, 3 or 4,
n, o, p: represent proportions of the monomer components in mole %, where n + o + p = 100 mole %, with the proviso that n and p are each ≥ 2 mole % and o is 0 to 96 mole %,
wherein the hydrophilic copolymers are built up randomly and have an average molecular weight of at least 1000.

2. Hydrophilic copolymers according to claim 1, characterised in that the alkyl radicals R² are methyl, ethyl, propyl or isopropyl.

3. Hydrophilic copolymers according to claim 1 or 2, characterised in that the monomer components which comprise acidic side groups are contained therein in a proportion (n) of 2 to 50 mole %.

4. Hydrophilic copolymers according to claim 1 or 2, characterised in that the monomer components which comprise basic side groups are contained therein in a proportion (p) of 2 to 50 mole %.

5. Hydrophilic copolymers according to claim 1 or 2, characterised in that the acidic and basic monomer components are contained therein in approximately equimolar proportions (n ≈ p) of 10 to 50 mole % each, and that the neutral, non-ionisable monomer components are contained in a proportion (o) of 80 to 0 mole %.

6. Hydrophilic copolymers according to one or more of claims 1 to 5, characterised in that the acidic and basic monomer components are contained therein in a proportion of about 10 to 40 mole % each.

7. Hydrophilic copolymers according to claim 1, characterised in that the neutral, non-ionisable monomer components are contained therein in a proportion (o) of 20 to 80 mole %.

8. Hydrophilic copolymers according to claim 1, characterised in that the non-ionisable monomer components originate from methyl acrylate, methyl methacrylate, ethyl acrylate or ethyl methacrylate.

9. Hydrophilic copolymers according to one or more of claims 1 to 8, characterised in that the polymer chain has an average molecular weight of 20,000 to 50,000.

10. Hydrophilic copolymers according to one or more of claims 1 to 9, characterised in that they can be produced by radical polymerisation.

11. Hydrophilic copolymers according to claim 10, characterised in that radical polymerisation has been conducted in nonpolar solvents, in which the monomers are homogeneously soluble at the polymerisation temperatures of about 60 to about 120°C which are employed, and in which the copolymers which are formed are insoluble in the sense of a precipitation polymerisation and precipitate out.

12. Hydrophilic copolymers according to claim 11, characterised in that the nonpolar solvents are nonpolar organic solvents.

13. The use of the hydrophilic copolymers according to claims 1 to 12 for imparting hydrophilic properties to lithographic substrates, particularly anodised aluminium supports for offset printing plates.

## Revendications

1. Copolymères hydrophiles, constitués de chaines polymères sur lesquelles sont disposés des groupes latéraux acides et basiques, de la structure suivante : 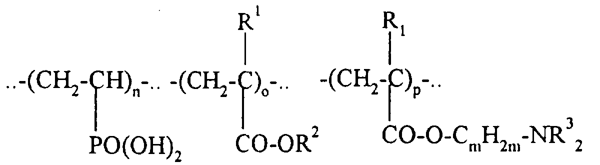 dans laquelle :
R¹ est H, CH₃, C₂H₅
R² est un résidu alkyle respectivement cycloalkyle avec de 1 à 17 atomes de C,
R³ est CH₃, C₂H₅ ou C₃H₇
m est 2, 3 ou 4
n, o, p sont les parts des motifs monomères en % en mol, n+ o+ p = 100% en mol avec la condition que n et p sont à chaque fois ≥ 2% en mol et O est compris entre 0 et 96% en mol, dans lesquels les copolymères hydrophiles sont constitués statistiquement et ont un poids moléculaire moyen d'au moins 1 000.

2. Copolymères hydrophiles selon la revendication 1, caractérisés en ce qu'il s'agit pour les restes alkyles R² des restes éthyle, méthyle, propyle ou isopropyle.

3. Copolymères hydrophiles selon la revendication 1 ou 2, caractérisés en ce que les motifs monomères qui portent les groupes latéraux acides y sont contenus dans une part (n) de 2 à 50% en mol.

4. Copolymères hydrophiles selon la revendication 1 ou 2, caractérisés en ce que les motifs monomères qui portent les groupes latéraux basiques y sont contenus dans une part (p) de 2 à 50% en mol.

5. Copolymères hydrophiles selon la revendication 1 ou 2, caractérisés en ce que les motifs monomères acides et basiques y sont contenus dans des parts à peu prés équimolaires (n ≈ p) comprises à chaque fois entre 10 et 50% en mol et en ce que les motifs monomères neutres non ionisables y sont contenus dans une part (o) de 80 à 0% en mol.

6. Copolymères hydrophiles selon l'une ou plusieurs quelconques des revendications 1 à 5, caractérisés en ce que les motifs monomères acides et basiques y sont à chaque fois contenus dans une part d'environ 10 à 40% en mol.

7. Copolymères hydrophiles selon la revendication 1, caractérisés en ce que les motifs monomères neutres non ionisables y sont contenus dans une part (o) de 20 à 80% en mol.

8. Copolymères hydrophiles selon la revendication 1, caractérisés en ce que les motifs monomères non ionisables proviennent de l'acrylate de méthyle, du méthacrylate de méthyle, de l'acrylate d'éthyle et du méthacrylate d'éthyle.

9. Copolymères hydrophiles selon l'une ou plusieurs quelconques des revendications 1 à 8, caractérisés en ce que la chaîne polymère présente un poids moléculaire moyen de 20 000 à 50 000.

10. Copolymères hydrophiles selon l'une ou plusieurs quelconques des revendications 1 à 9, caractérisés en ce qu'ils peuvent être préparés par polymérisation radicalaire.

11. Copolymères hydrophiles selon la revendications 10, caractérisés en ce que la polymérisation radicalaire a été réalisée dans des solvants non polaires, dans lesquels les monomères sont solubles de manière homogène aux températures de polymérisation appliquées d'environ 60 à environ 120°C et dans lesquels les copolymères formés sont insolubles et précipitent dans le sens d'une polymérisation de précipitation.

12. Copolymères hydrophiles selon la revendication 11, caractérisés en ce que les solvants non polaires sont des solvants organiques non polaires.

13. Utilisation des copolymères hydrophiles selon les revendications 1 à 12 pour l'hydrophilation de substrats lithographiques, particulièrement de supports en aluminium anodisés pour des plaques d'impression offset.
